# EUROPÄISCHE PATENTSCHRIFT

(11) **EP 1 344 419 B1**
(45) Veröffentlichungstag und Bekanntmachung des Hinweises auf die Patenterteilung: **18.04.2007**
(21) Anmeldenummer: 01984701.1
(22) Anmeldetag: 12.12.2001
(51) Int. Cl.: H04Q 7/34

(54) **VERFAHREN ZUM ERMITTELN DER ÜBERTRAGUNGSQUALITÄT IN EINEM ÜBERTRAGUNGSSYSTEM SOWIE ENTSPRECHENDES ÜBERTRAGUNGSSYSTEM**
METHOD FOR DETERMINING THE TRANSMISSION QUALITY IN A TRANSMISSION SYSTEM AND CORRESPONDING TRANSMISSION SYSTEM
PROCEDE POUR DETERMINER LA QUALITE DE TRANSMISSION DANS UN SYSTEME DE TRANSMISSION, ET SYSTEME DE TRANSMISSION CORRESPONDANT

(30) Priorität: 19.12.2000 DE 10063243
(43) Veröffentlichungstag der Anmeldung: 17.09.2003
(73) Patentinhaber: SIEMENS AKTIENGESELLSCHAFT, 80333 München (DE)
(72) Erfinder: RAAF, Bernhard, 81475 München (DE)
(86) Internationale Anmeldenummer: PCT/DE2001/004670
(87) Internationale Veröffentlichungsnummer: WO 2002/051184

(56) Entgegenhaltungen:
- WO-A-00/51380
- US-A- 6 069 876
- THOMPSON K S: "TEST CHALLENGES FOR CDMA CELLULAR" MOBILE RADIO TECHNOLOGY, INTERTEC PUBLISHING CORPORATION, US, Bd. 13, Nr. 4, 1. April 1995 (1995-04-01), Seite 14,16,18,20, XP000504366 ISSN: 0745-7626

## Beschreibung

Die vorliegende Erfindung betrifft ein Verfahren nach dem Oberbegriff des Anspruches 1 zum Ermitteln der Übertragungsqualität in einem Übertragungssystem, insbesondere einem Funksystem, sowie ein entsprechend ausgestaltetes Übertragungssystem nach dem Oberbegriff des Anspruches 10, insbesondere ein entsprechend ausgestaltetes Mobilfunksystem.

Zur Zulassung neuer Mobilfunkgeräte sowie zur Durchführung anderer Abnahme- und Fertigungstests wird in herkömmlichen Mobilfunksystemen die Übertragungsqualität der von dem jeweiligen Mobilfunkgerät bzw. der jeweiligen Mobilstation veranlassten Datenübertragung ermittelt, wobei hierzu insbesondere die Bitfehlerrate der Datenübertragung gemessen wird. Zu diesem Zweck werden von einer Basisstation Prüfdaten über den sogenannten Downlink-Kanal an die Mobilstation übertragen. Die Mobilstation sendet die von der Basisstation empfangenen Daten über den sogenannten Uplink-Kanal an die Basisstation zurück, so dass die Basisstation durch Vergleich der ursprünglich gesendeten Daten mit den von der Mobilstation empfangenen Daten die Bitfehlerrate der Mobilstation bestimmen kann.

Das zuvor beschriebene Verfahren ist einfach realisierbar, wenn die Datenrate des Downlink-Kanals mit der Datenrate des Uplink-Kanals übereinstimmt. Bei Verwendung von asymmetrischen Datenraten kann dieses Verfahren jedoch nicht einfach realisiert werden. Insbesondere kann bei Verwendung einer höheren Datenrate im Downlink-Kanal die Mobilstation nicht alle von der Basisstation empfangenen Daten an die Basisstation zurücksenden.

In Mobilfunksystemen gemäß dem GSM-Mobilfunkstandard ("Global System For Mobile Communications") wird daher die Mobilstation aufgefordert, nur einen gewissen Teil der von der Basisstation empfangenen Daten zurückzusenden. So kann die Mobilstation beispielsweise aufgefordert werden, lediglich die in einem bestimmten von mehreren parallel betriebenen Downlink-Zeitschlitzen empfangenen Daten in einem einzigen Uplink-Zeitschlitz an die Basisstation zurückzusenden. Insbesondere können beispielsweise die in dem zweiten von drei parallel betriebenen Downlink-Zeitschlitzen empfangenen Daten von der Mobilstation in einem einzigen Uplink-Zeitschlitz an die Basisstation zurückgesendet werden. Die Messung der Bitfehlerrate kann auf allen Downlink-Zeitschlitzen sukzessive seriell durchgeführt werden.

Darüber hinaus kann auch vorgesehen sein, dass die Mobilstation so vieler Downlink-Kanäle wie möglich an die Basisstation zurücksendet. Ist jedoch die Downlink-Datenrate höher als die Uplink-Datenrate, ist es für die Mobilstation niemals möglich, alle von der Basisstation empfangenen Daten an die Basisstation zurückzusenden.

Aus US 6 069 876 A ist ein ATM-Netzwerk bekannt, bei dem zur Fehlerdetektion und zum Aufzeigen einer Performance ein "Bit Error Rate Test, BERT" verwendet wird. Dabei wird ein modifizierter "ATM Idle Cell" verwendet, um Fehlerroutinen auszuführen. In dem Netzwerk werden asymmetrische Datenraten für den Vorwärts- und Rückkanal verwendet.

Aus der Druckschrift "TEST CHALLENGES FOR CDMA CELLULAR" von THOMPSON, MOBILE RADIO TECHNOLOGY, INTERTEC PUBLISHING CORPORATION, US, Bd. 13, Nr. 4, 1. April 1995, Seite 14, 16, 18, 20, ISSN: 0745-7626 ist ein Testverfahren für ein CDMA-Funkkommunikationssystem bekannt.

Der vorliegenden Erfindung liegt die Aufgabe zugrunde, ein Verfahren zum Ermitteln der Übertragungsqualität in einem Übertragungssystem sowie ein entsprechend ausgestaltetes Übertragungssystem, insbesondere ein entsprechend ausgestaltetes Mobilfunksystem, vorzuschlagen, womit die zuvor beschriebene Messung einfach und schnell auch bei Verwendung von asymmetrischen Datenraten durchgeführt werden kann.

Diese Aufgabe wird erfindungsgemäß durch ein Verfahren mit den Merkmalen des Anspruches 1 bzw. durch ein Übertragungssystem mit den Merkmalen des Anspruches 10 gelöst. Die Unteransprüche definieren jeweils bevorzugte und vorteilhafte Ausführungsformen der vorliegenden Erfindung.

Erfindungsgemäß wird vorgeschlagen, dass in einem Übertragungssystem von einer Sende-/Empfangseinheit die von einer anderen Sende-/Empfangseinheit empfangenen Daten miteinander kombiniert werden und das daraus resultierende Kombinationsergebnis zurück an die andere Sende-/Empfangseinheit übertragen wird, so dass diese andere Sende-/Empfangseinheit durch Auswertung des daraufhin empfangenen Kombinationsergebnisses die Übertragungsqualität, insbesondere die Bitfehlerrate, der erstgenannten Sende-/Empfangseinheit ermitteln kann.

Eine mögliche Verknüpfung der empfangenen Daten kann beispielsweise eine Exklusiv-Oder-Verknüpfung (XOR-Verknüpfung) sein, wobei vorzugsweise die über mehrere Kanäle übertragenen Daten bzw. die über diese Kanäle empfangenen Bits von der entsprechenden Sende-/Empfangseinheit dieser Verknüpfung unterzogen werden. Darüber hinaus können auch andere Funktionen verwendet werden, welche eine Verknüpfung oder Kombination der empfangenen Daten zur Folge haben. So kann beispielsweise eine Prüfsumme über eine gewisse Anzahl von empfangenen Bits gebildet werden, wobei die Bitanzahl der Prüfsumme geringer ist als diejenige Anzahl der Bits, über welche die Prüfsumme gebildet wird. Dies hat den Vorteil, das auch Mehrfachfehler erkannt werden können. Darüber hinaus sind auch Prüfsummen bekannt, bei denen nicht nur Mehrfachfehler erkannt werden können, sondern bei denen auch die Anzahl der aufgetretenen Fehler bis zu einem gewissen Maß erkannt werden kann.

Die vorliegende Erfindung eignet sich bevorzugt zum Einsatz in einem Mobilfunksystem mit asymmetrischen Übertragungsraten, wobei insbesondere die Übertragungsrate des Downlink-Kanals größer als die Übertragungsrate des Uplink-Kanals ist. In diesem Fall werden von einer Basisstation Prüfdaten an eine zu testende Mobilstation übertragen, und von der Mobilstation werden die daraufhin empfangenen Prüfdaten derart miteinander kombiniert, dass ein entsprechendes Kombinationsergebnis erhalten wird, welches somit von der Mobilstation zur Übermittlung der Übertragungsqualität bzw. der Bitfehlerrate zurück an die Basisstation gesendet werden kann. Dabei kann die Mobilstation grundsätzlich auch derart ausgestaltet sein, dass ein Teil der von der Basisstation empfangenen Prüfdaten unverändert an die Basisstation zurückgesendet wird, während lediglich ein anderer Teil der empfangenen Prüfdaten wie zuvor beschrieben miteinander kombiniert bzw. verknüpft wird, so dass die von der Mobilstation an die Basisstation zurückgesendeten Daten einerseits einen Teil der von der Basisstation empfangenen Daten und andererseits das auf zuvor beschriebene Art und Weise gebildete Kombinationsergebnis umfassen.

Der Vorteil der zuvor beschriebenen Erfindung liegt darin, dass die Bitfehlerrate der Mobilstation bzw. der zu testenden Sende-/Empfangseinheit relativ rasch ermittelt bzw. gemessen werden kann. Zudem verhindert die vorliegende Erfindung, dass durch Eigenheiten des verwendeten Empfangsalgorithmus der Mobilstation bzw. der zu testenden Sende-/Empfangseinheit die Messergebnisse verfälscht werden können. Wird nämlich, wie zuvor anhand des Stands der Technik beschrieben, lediglich ein Teil des von der Mobilstation bzw. der zu testenden Sende-/Empfangseinheit empfangenen Datenstroms zurückgesendet, könnte die Mobilstation derart programmiert werden, dass sie einen großen Anteil der verfügbaren Rechenleistung zur Dekodierung dieses zurückgesendeten Teils des Datenstroms verwendet und den Rest der empfangenen Daten vernachlässigt. In diesem Fall würde die gemessene Bitfehlerrate nicht der im Durchschnitt erreichten Bitfehlerrate entsprechen.

Anstelle einer Kombination der einzelnen Bits kann auch lediglich eine Auswahl der empfangenen Bits zurückgesendet werden, wobei die zurückgesendeten Bits nicht aus einem Datenblock (Zeitschlitz), sondern möglichst gleichmäßig aus allen empfangenen Bits ausgewählt werden. Je nach gewähltem Codierverfahren ist es dann schwierig bis unmöglich, durch Verzicht auf die nicht zurückgesendeten Daten Rechenleistung einzusparen.

Die vorliegende Erfindung wird nachfolgend näher unter Bezugnahme auf die beigefügte Zeichnung anhand bevorzugter Ausführungsbeispiele eines erfindungsgemäßen Mobilfunksystems erläutert, wobei die vorliegende Erfindung jedoch grundsätzlich auf jede beliebige Art von Funksystemen anwendbar ist.
Figur 1 zeigt eine schematische Darstellung eines Mobilfunksystems zur Erläuterung des der vorliegenden Erfindung zugrundliegenden Prinzips, und
Figur 2 zeigt eine Darstellung zur Erläuterung der Kombination von durch eine in Figur 1 gezeigte Mobilstation über verschiedene Zeitschlitze empfangenen Daten, um diese somit kombinierten Daten zurück an eine in Figur 1 gezeigte Basisstation zur Ermittelung der Bitfehlerrate der Mobilstation zu übertragen.

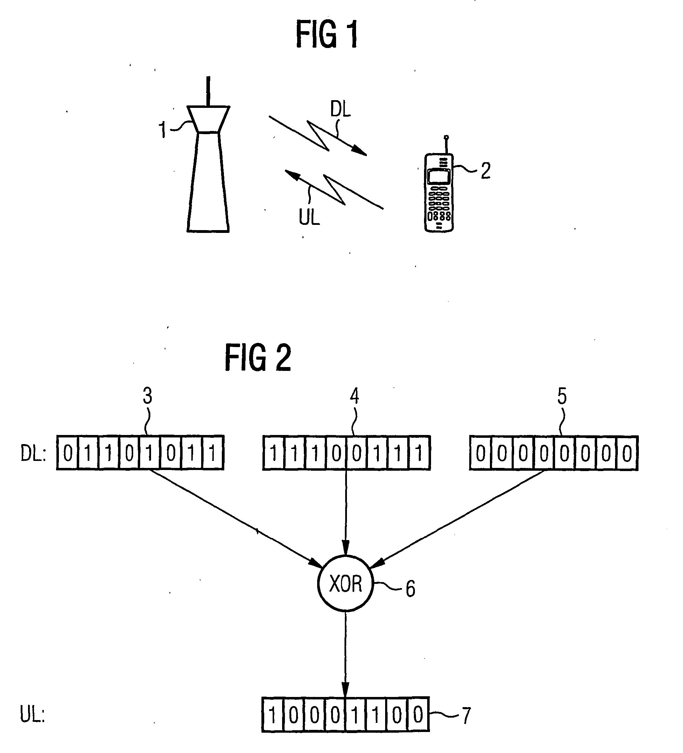

In Figur 1 ist ein Mobilfunksystem mit einer Basisstation 1 und einer damit kommunizierenden Mobilstation 2 dargestellt. Die Basisstation 1 sendet über den sogenannten Downlink-Kanal DL Daten an die Mobilstation 2, während die Mobilstation 2 über den sogenannten Uplink-Kanal UL Daten an die Basisstation 1 überträgt. Im Rahmen der vorliegenden Erfindung wird davon ausgegangen, dass die Basisstation 1 Prüfdaten über den Downlink-Kanal DL an die Mobilstation 2 überträgt, welche zumindest teilweise von der Mobilstation 2 miteinander kombiniert und verknüpft werden, wobei die daraus resultierenden Daten von der Mobilstation 2 über den Uplink-Kanal UL an die Basisstation 1 übertragen werden, so dass die Basisstation durch Vergleich der ursprünglich über den Downlink-Kanal DL übertragenen Daten mit den von der Mobilstation 2 daraufhin über den Uplink-Kanal UL empfangenen Daten die Bitfehlerrate der Übertragung durch die Mobilstation 2 ermitteln bzw. messen kann. Diese Messung ist im Normalbetrieb in der Regel nicht erforderlich, wohl aber für die Zulassung oder andere Abnahme- und Fertigungstests der Mobilstation 2.

Des Weiteren wird nachfolgend davon ausgegangen, dass die Übertragungsrate des Downlink-Kanals DL größer als die Übertragungsrate des Uplink-Kanals UL ist, d.h. die Datenübertragung zwischen der Basisstation 1 und der Mobilstation 2 erfolgt mit asymmetrischen Daten- bzw. Übertragungsraten. Die Asymmetrie der Übertragung kann beispielsweise durch die Verwendung einer unterschiedlichen Anzahl von Zeitschlitzen ("Time Slots") oder anderen sogenannten "Resource Units" auf dem Downlink-Kanal DL und dem Uplink-Kanal UL begründet sein. Darüber hinaus kann die Asymmetrie auch beispielsweise durch unterschiedliche Kodierungsverfahren im Downlink-Kanal DL und im Uplink-Kanal UL begründet sein. Bei CDMA-Systemen kann auch ein unterschiedlicher Spreizfaktor im Uplink- und Downlink-Kanal verwendet werden. Des Weiteren können beispielsweise auch völlig unterschiedliche Übertragungsverfahren im Uplink- und Downlink-Kanal angewendet werden (z.B. DAB im Downlink-Kanal und Zellularfunk im Uplink-Kanal).

Die Mobilstation 2 ist derart ausgestaltet, dass sie die von der Basisstation 1 über den Downlink-Kanal DL empfangenen Prüfdaten miteinander kombiniert und das daraus resultierende Kombinationsergebnis über den Uplink-Kanal UL an die Basisstation 1 zurücksendet, so dass die Basisstation 1 durch Vergleich des somit empfangenen Kombinationsergebnisses mit den ursprünglich von der Basisstation 1 gesendeten Prüfdaten auf die Bitfehlerrate der Mobilstation 2 schließen kann. Mit Hilfe dieser Vorgehensweise kann die Bitfehlerrate über den Uplink-Rückkanal mit geringerer Bandbreite gemessen werden. Die Mobilstation 2 ist insbesondere derart ausgestaltet, dass sie mehrere Downlink-Kanäle bzw. mehrere empfangene Downlink-Bits miteinander verknüpft.

Ein Beispiel für eine derartige Verknüpfung ist in Figur 2 dargestellt, wobei davon ausgegangen wird, dass von der Mobilstation 2 die Daten von drei parallel gesendeten Downlink-Zeitschlitzen 3-5 miteinander verknüpft werden, um somit die von der Mobilstation 2 an die Basisstation 1 in einem einzigen Uplink-Zeitschlitz 7 zurückzusendenden Daten zu erhalten. Bei dem in Figur 2 dargestellten Ausführungsbeispiel handelt es sich insbesondere um eine Exklusiv-Oder-Verknüpfung XOR-Verknüpfung 6, welche von der Mobilstation 2 durchgeführt wird, wobei dem n-ten Bit des Uplink-Zeitschlitzes 7 das Ergebnis der Exklusiv-Oder-Verknüpfung der n-ten Bits der Downlink-Zeitschlitze 3-5 zugewiesen wird. Tritt nun ein Fehler in einem dieser Bits auf, lässt sich dies von der Basisstation 1 einfach anhand des von der Mobilstation 2 in Form des Uplink-Zeitschlitzes 7 zurückgesendeten Verknüpfungs- oder Kombinationsergebnisses ablesen.

Selbstverständlich kann anstelle der zuvor beschriebenen Exklusiv-Oder-Verknüpfung 6 auch jede andere geeignete Art einer Verknüpfung bzw. Kombination der von der Mobilstation 2 empfangenen Daten bzw. Bits vorgesehen sein. So kann beispielsweise die Mobilstation 2 auch derart ausgestaltet sein, dass über eine gewisse Anzahl der empfangenen Bits eine Prüfsumme gebildet wird, wobei die Bitanzahl der daraus resultierenden Prüfsumme geringer ist als die Anzahl der Bits, über welche die Prüfsumme gebildet wird. Dies hat den Vorteil, dass auch Mehrfachfehler erkannt werden können. Insbesondere können auch Prüfsummen verwendet werden, bei denen bis zu einem gewissen Maß die Anzahl der Fehler durch die Basisstation 1 erkannt werden kann.

Bei der Auswahl derjenigen Bits, welche in der Mobilstation 2 miteinander kombiniert bzw. verknüpft und demzufolge zusammengefasst werden sollen, sollte darauf geachtet werden, dass diese Bits nicht "gleichzeitig" durch die Basisstation 1 übertragen werden, so dass kurzzeitige Störungen nicht zu unerwünschten Mehrfachfehlern innerhalb dieser kombinierten Bits führen. Dazu kann beispielsweise ein Interleaver verwendet werden, der den empfangenen Datenstrom vor Anwendung der Verknüpfung/Kombination verwürfelt.

Die Mobilstation 2 kann auch derart ausgestaltet sein, dass nicht sämtliche über den Downlink-Kanal DL empfangenen Daten miteinander kombiniert werden, sondern dass ein Teil dieser über den Downlink-Kanal DL empfangenen Daten unverändert an die Basisstation 1 über den Uplink-Kanal UL zurückgesendet und lediglich der verbleibende Teil der empfangenen Daten oder auch nur ein Teil dieses verbleibenden Teils wie zuvor beschrieben miteinander kombiniert wird, so dass die von der Basisstation 1 zur Bestimmung der Bitfehlerrate auszuwertenden und über den Uplink-Kanal empfangenen Daten einerseits die von der Mobilstation 2 unverändert zurückgesendeten Daten und andererseits die aus der von der Mobilstation 2 durchgeführten Verknüpfung resultierenden Daten umfassen. Wird ein gewisser Teil der von der Mobilstation 2 über den Downlink-Kanal DL empfangenen Daten unverändert an die Basisstation 1 zurückgesendet, sollten die unverändert zurückgesendeten Bits nicht aus einem empfangenen Daten- bzw. Bitblock ausgewählt werden, sondern möglichst gleichmäßig aus allen über den Downlink-Kanal DL übertragenen und von der Mobilstation 2 empfangenen Bits ausgewählt werden. Auch hier bietet sich die Verwendung eines Interleavers an. Auf diese Weise kann das Messergebnis beispielsweise durch den in der Mobilstation 2 verwendeten Algorithmus weniger einfach beeinflusst oder verfälscht werden, da es abhängig von dem jeweils gewählten Kodierverfahren dann unwahrscheinlich bis unmöglich ist, durch ungleichmäßige Verteilung der Rechenleistung auf die Teile der Daten eine ungleichmäßige Bitfehlerverteilung zu erhalten. Wie bereits zuvor erwähnt worden ist, ist bei der herkömmlichen Ermittlung der Bitfehlerrate eine Verfälschung der Messergebnisse beispielsweise durch Verwendung eines entsprechenden Algorithmus in der Mobilstation 2 relativ einfach möglich, wenn lediglich ein Teil der von der Mobilstation 2 empfangenen Daten unverändert an die Basisstation 1 zurückgesendet wird, da in diesem Fall die Mobilstation 2 so programmiert werden kann, dass sie die mehr verfügbare Rechenleistung zur Dekodierung der zurückgesendeten Daten verwendet, wobei die restlichen Daten eine höhere Bitfehlerrate erfahren, da z.B. gewisse approximierende Annahmen, welche im Empfangsalgorithmus verwendet werden, für diesen Teil der Daten weniger genau zutreffen werden, so dass die von der Basisstation 1 gemessene Bitfehlerrate nicht der im realen Betrieb erreichbaren Bitfehlerrate entspricht.

Obwohl die vorliegende Erfindung zuvor anhand eines Mobilfunksystems mit unsymmetrischen Übertragungsraten erläutert worden ist, kann die Erfindung selbstverständlich grundsätzlich auch auf Mobilfunksysteme mit symmetrischen Übertragungsraten angewendet werden. Des Weiteren kann die Auswertung der von der Mobilstation 2 zurückgesendeten Daten auch von einer Mobilstation-Testvorrichtung wahrgenommen werden, welche keiner Basisstation 1 zugeordnet ist.

## Patentansprüche

1. Verfahren zum Ermitteln der Übertragungsqualität in einem Übertragungssystem,
umfassend die Schritte:
a) von einer ersten Sende-/Empfangseinheit (1) werden erste Daten an eine zweite Sende-/Empfangseinheit (2) übertragen,
b) von der zweiten Sende-/Empfangseinheit (2) werden in Abhängigkeit von den daraufhin empfangenen Daten zweite Daten an die erste Sende-/Empfangseinheit (1) übertragen, und
c) von der ersten Sende-/Empfangseinheit (1) werden die daraufhin von der zweiten Sende-/Empfangseinheit (2) empfangenen Daten ausgewertet, um die Übertragungsqualität der Übertragung zwischen der zweiten Sende-/Empfangseinheit (2) und der ersten Sende-/Empfangseinheit (1) zu ermitteln,
**dadurch gekennzeichnet,**
- **dass** im Schritt b) die von der zweiten Sende-/Empfangseinheit (2) empfangenen Daten zumindest teilweise miteinander kombiniert werden, und
- **dass** im Schritt b) das daraus resultierende Kombinationsergebnis von der zweiten Sende-/Empfangseinheit (2) als Bestandteil der zweiten Daten an die erste Sende-/Empfangseinheit (1) übertragen wird.

2. Verfahren nach Anspruch 1, **dadurch gekennzeichnet,**
- **dass** das Funksystem ein Mobilfunksystem ist, und
- **dass** die erste Sende-/Empfangseinheit (1) eine Testvorrichtung des Mobilfunksystems und die zweite Sende-/Empfangseinheit (2) eine Mobilstation des Mobilfunksystems ist.

3. Verfahren nach Anspruch 1 oder 2, **dadurch gekennzeichnet, dass** die Übertragung der ersten Daten von der ersten Sende-/Empfangseinheit (1) an die zweite Sende-/Empfangseinheit (2) mit einer größeren Übertragungsrate als die Übertragung der zweiten Daten von der zweiten Sende-/Empfangseinheit (2) an die erste Sende-/Empfangseinheit (1) erfolgt.

4. Verfahren nach einem der vorhergehenen Ansprüche, **dadurch gekennzeichnet, dass** die im Schritt b) von der zweiten Sende-/Empfangseinheit (2) an die erste Sende-/Empfangseinheit (1) übertragenen zweiten Daten neben dem Kombinationsergebnis teilweise die von der zweiten Sende-/Empfangseinheit (2) auf Grundlage der im Schritt a) von der ersten Sende-/Empfangseinheit (1) übertragenen ersten Daten empfangenen Daten umfassen.

5. Verfahren nach einem der vorhergehenden Ansprüche, **dadurch gekennzeichnet,**
- **dass** die Übertragung der ersten Daten von der ersten Sende-/Empfangseinheit (1) an die zweite Sende-/Empfangseinheit (2) sowie die Übertragung der zweiten Daten von der zweiten Sende-/Empfangseinheit (2) an die erste Sende-/Empfangseinheit (1) in eine Datenblockstruktur eingebettet erfolgt, und
- **dass** bei der in Schritt b) von der zweiten Sende-/Empfangseinheit (2) durchgeführten Kombination die von der zweiten Sende-/Empfangseinheit (2) in mehreren unterschiedlichen Datenblöcken in Abhängigkeit von den im Schritt a) von der ersten Sende-/Empfangseinheit (1) übertragenen ersten Daten empfangenen Daten miteinander kombiniert werden, wobei das daraus resultierende Kombinationsergebnis von der zweiten Sende-/Empfangseinheit (2) in einem weiteren Datenblock als Bestandteil der zweiten Daten auf die erste Sende-/Empfangseinheit (1) übertragen wird.

6. Verfahren nach einem der vorhergehenden Ansprüche, **dadurch gekennzeichnet, dass** im Schritt b) einzelne Bits der von der zweiten Sende-/Empfangseinheit (2) in Abhängigkeit von den im Schritt a) von der ersten Sende-/Empfangseinheit (1) übertragenen ersten Daten empfangenen Daten miteinander kombiniert werden.

7. Verfahren nach den Ansprüchen 5 und 6, **dadurch gekennzeichnet, dass** mit Hilfe der im Schritt b) durchgeführten Kombination jeweils einem in dem weiteren Datenblock (7) von der zweiten Sende-/Empfangseinheit (2) an die erste Sende-/Empfangseinheit (1) übertragenen Bit eine Kombination von in den mehreren unterschiedlichen Datenblöcken (3-5) durch die zweite Sende-/Empfangseinheit (2) empfangenen Bits zugeordnet wird.

8. Verfahren nach einem der vorhergehenden Ansprüche, **dadurch gekennzeichnet, dass** es sich bei der im Schritt b) durchgeführten Kombination um eine Exklusiv-Oder-Verknüpfung einzelner Bits der von der zweiten Sende-/Empfangseinheit (2) in Abhängigkeit von den im Schritt a) durch die erste Sende-/Empfangseinheit (1) übertragenen ersten Daten empfangenen Daten handelt.

9. Verfahren nach einem der Ansprüche 1-7, **dadurch gekennzeichnet, dass** mit Hilfe der im Schritt b) durchgeführten Kombination eine Prüfsumme über einzelne Bits der von der zweiten Sende-/Empfangseinheit (2) in Abhängigkeit von den im Schritt a) durch die erste Sende-/Empfangseinheit (1) übertragenen ersten Daten empfangenen Daten gebildet und als Kombinationsergebnis von der zweiten Sende-/Empfangs-einheit (2) an die erste Sende-/Empfangseinheit (1) übertragen wird.

10. Übertragungssystem,
mit einer ersten Sende-/Empfangseinheit (1) und einer zweiten Sende-/Empfangseinheit (2),
wobei die erste Sende-/Empfangseinheit (1) zur Übertragung von ersten Daten an die zweite Sende-/Empfangseinheit (2) ausgestaltet ist,
wobei die zweite Sende-/Empfangseinheit (2) zur Übertragung von zweiten Daten an die erste Sende-/Empfangseinheit (1) in Abhängigkeit von den daraufhin durch die zweite Sende-/Empfangseinheit (2) empfangenen Daten ausgestaltet ist, und
dass die erste Sende-/Empfangseinheit (1) zur Auswertung der daraufhin durch die erste Sende-/Empfangseinheit von der zweiten Sende-/Empfangseinheit empfangenen Daten ausgestaltet ist, um die Übertragungsqualität der Übertragung zwischen der zweiten Sende-/Empfangseinheit (2) und der ersten Sende-/Empfangseinheit (1) zu ermitteln,
**dadurch gekennzeichnet,**
**dass** die zweite Sende-/Empfangseinheit (2) derart ausgestaltet ist, dass sie die in Abhängigkeit von den durch die erste Sende-/Empfangseinheit (1) übertragenen ersten Daten empfangenen Daten zumindest teilweise miteinander kombiniert und das daraus resultierende Kombinationsergebnis als Bestandteil der zweiten Daten an die erste Sende-/Empfangseinheit (1) überträgt.

11. Übertragungssystem nach Anspruch 10, **dadurch gekennzeichnet, dass** die erste Sende-/Empfangseinheit (1) zur Durchführung des Verfahrens nach einem der Ansprüche 1-9 ausgestaltet ist.

12. Übertragungssystem nach Anspruch 10 oder 11, **dadurch gekennzeichnet, dass** die zweite Sende-/Empfangseinheit (2) zur Durchführung des Verfahrens nach einem der Ansprüche 1-9 ausgestaltet ist.

## Claims

1. Method for determining the transmission quality in a transmission system, comprising the following steps:
a) first data is transmitted from a first transmit/receive unit (1) to a second transmit/receive unit (2),
b) second data is transmitted from the second transmit/receive unit (2) to the first transmit/receive unit (1) as a function of the data received hereupon
c) the data consequently received from the second transmit/receive unit (2) is evaluated by the first transmit/receive unit (1), in order to determine the transmission quality of the transmission between the second transmit/receive unit (2) and the first transmit/receive unit (1),
**characterised in that**
- in step b), the data received by the second transmit/receive unit (2) is at least partially combined together, and
- that in step b), the combination resulting therefrom is transmitted from the second transmit/receive unit (2) as a component of the second data to the first transmit/receive unit (1).

2. Method according to claim 1, **characterised in that**
- the radio system is a mobile radio system, and
- the first transmit/receive unit (1) is a test device of the mobile radio system and the second transmit/receive unit (2) is a mobile station of the mobile radio system.

3. Method according to claim 1 or 2, **characterised in that** the transmission of the first data from the first transmit/receive unit (1) to the second transmit/receive unit (2) is carried out at a greater transmission rate than the transmission of the second data from the second transmit/receive unit (2) to the first transmit/receive unit (1).

4. Method according to one of the preceding claims, **characterised in that** in addition to the combination result, the second data transmitted in step b) from the second transmit/receive unit (2) to the first transmit/receive unit (1) partially comprises the data received by the second transmit/receive unit (2) on the basis of the first data transmitted in step a) transmitted from the first transmit/receive unit (1).

5. Method according to one of the preceding claims,
**characterised in that**
- the transmission of the first data from the first transmit/receive unit (1) to the second transmit/receive unit (2) as well as the transmission of the second data from the second transmit/receive unit (2) to the first transmit/receive unit (1) is carried out in a data block structure in an embedded fashion, and
- that with the combination carried out in step b) by the second transmit/receive unit (2), the data received by the second transmit/receive unit (2) in several different data blocks is combined together as a function of the first data transmitted by the first transmit/receive unit (1) in step (a), with the combination resulting herefrom being transmitted from the second transmit/receive unit (2) to the first transmit/receive unit (1) in a further data block as a component of the second data.

6. Method according to one of the preceding claims, **characterised in that** in step b), individual bits of the data received by the second transmit/receive unit (2) are combined with one another as a function of the first data transmitted in step a) from the first transmit/receive unit (1).

7. Method according to one of claims 5 or 6, **characterised in that** with the aid of the combination carried out in step b), a combination of bits received by the second receive/transmit unit (2) in a number of different data blocks (3-5) is assigned to each of the bits transmitted by the second transmit/receive unit (1) to the first transmit/receive unit (1) in the further data block (7).

8. Method according to one of the preceding claims, **characterised in that** the combination implemented in step b) is an XOR link of individual bits of the data received by the second transmit/receive unit (2) as a function of the first data transmitted in step a) by the first transmit/receive unit (1).

9. Method according to one of claims 1-7, **characterised in that** with the aid of the combination carried out in step b), a checksum relating to individual bits of the data received by the second transmit/receive unit (2) as a function of the first data transmitted in step a) by the first transmit/receive unit is formed, and is transmitted as a combination result from the second transmit/receive unit (2) to the first transmit/receive unit (1).

10. Transmission system,
having a first transmit/receive unit (1) and a second transmit/receive unit (2),
with the first transmit/receive unit (1) being designed to transmit first data to the second transmit/receive unit (2), with the second transmit/receive unit (2) being designed to transmit second data to the first transmit/receive unit (1) as a function of the data received thereupon by the second transmit/receive unit (2), and
that the first transmit/receive unit (1) is designed to evaluate the data received by the first transmit/receive unit from the second transmit/receive unit, in order to determine the transmission quality of the transmission between the second transmit/receive unit (2) and the first transmit/receive unit (1), **characterised in that**
the second transmit/receive unit (2) is designed such that it partially combines the data received as a function of the first data transmitted by the first transmit/receive unit (1) together and transmits the combination resulting therefrom as a component of the second data to the first transmit/receive unit (1).

11. Transmission system according to claim 10, **characterised in that** the first transmit/receive unit (1) is designed to implement the method according to one of claims 1-9.

12. Transmission system according to claim 10 or 11, **characterised in that** the second transmit/receive unit (2) is designed to implement the method according to one of claims 1-9.

## Revendications

1. Procédé pour déterminer la qualité de transmission dans un système de transmission,
comprenant les étapes suivantes :
a) des premières données sont transmises par une première unité d'émission/réception (1) à une deuxième unité d'émission/réception (2),
b) en fonction des données reçues après cela, des deuxièmes données sont transmises à la première unité d'émission/réception (1) par la deuxième unité d'émission/réception (2), et
c) les données reçues après cela de la part de la deuxième unité d'émission/réception (2) sont évaluées par la première unité d'émission/réception (1) afin de déterminer la qualité de transmission de la transmission entre la deuxième unité d'émission/réception (2) et la première unité d'émission/réception (1),
**caractérisé**
- **en ce qu**'à l'étape b), les données reçues par la deuxième unité d'émission/réception (2) sont combinées entre elles, tout du moins en partie, et
- **en ce qu**'à l'étape b), le résultat provenant de la combinaison est transmis, en tant que partie intégrante des deuxièmes données, à la première unité d'émission/réception (1) par la deuxième unité d'émission/réception (2).

2. Procédé selon la revendication 1, **caractérisé**
- **en ce que** le système radio est un système de radiocommunication mobile, et
- **en ce que** la première unité d'émission/réception(1) est un dispositif de test du système de radiocommunication mobile et la deuxième unité d'émission/réception (2) est une station mobile du système de radiocommunication mobile.

3. Procédé selon la revendication 1 ou 2, **caractérisé en ce que** la transmission des premières données à la deuxième unité d'émission/réception (2) par la première unité d'émission/réception (1) est réalisée avec un débit de transmission supérieur à celui de la transmission des deuxièmes données à la première unité d'émission/réception (1) par la deuxième unité d'émission/réception (2).

4. Procédé selon l'une quelconque des revendications précédentes, **caractérisé en ce que** les deuxièmes données transmises à l'étape b) par la deuxième unité d'émission/réception (2) à la première unité d'émission/réception (1), outre le résultat provenant de la combinaison, comprennent en partie les données reçues par la deuxième unité d'émission/réception (2) sur la base des premières données transmises à l'étape a) par la première unité d'émission/réception (1).

5. Procédé selon l'une quelconque des revendications précédentes, **caractérisé**
- **en ce que** la transmission des premières données à la deuxième unité d'émission/réception (2) par la première unité d'émission/réception (1) ainsi que la transmission des deuxièmes données à la première unité d'émission/réception (1) par la deuxième unité d'émission/réception (2) sont réalisées en étant insérées dans une structure de bloc de données, et
- **en ce que**, lors de la combinaison exécutée à l'étape b) par la deuxième unité d'émission/réception (2), les données reçues par la deuxième unité d'émission/réception (2) en plusieurs blocs de données différents en fonction des premières données transmises à l'étape a) par la première unité d'émission/réception (1) sont combinées entre elles, le résultat provenant de la combinaison étant transmis à la première unité d'émission/réception (1) par la deuxième unité d'émission/réception (2) dans un autre bloc de données en tant que partie intégrante des deuxièmes données.

6. Procédé selon l'une quelconque des revendications précédentes, **caractérisé en ce qu'**à l'étape b), des bits individuels des données reçues par la deuxième unité d'émission/réception (2) en fonction des premières données transmises à l'étape a) par la première unité d'émission/réception (1) sont combinés entre eux.

7. Procédé selon les revendications 5 et 6, **caractérisé en ce qu'**à l'aide de la combinaison exécutée à l'étape b), une combinaison de bits reçus dans les plusieurs différents blocs de données (3 - 5) par la deuxième unité d'émission/réception (2) est respectivement affectée à un bit transmis dans l'autre bloc de données (7) à la première unité d'émission/réception (1) par la deuxième unité d'émission/réception (2).

8. Procédé selon l'une quelconque des revendications précédentes, **caractérisé en ce que** la combinaison exécutée à l'étape b) est une liaison OU Exclusif de bits individuels des données reçues par la deuxième unité d'émission/réception (2) en fonction des premières données transmises par la première unité d'émission/réception (1) à l'étape a).

9. Procédé selon l'une quelconque des revendications 1 à 7, **caractérisé en ce qu'**à l'aide de la combinaison exécutée à l'étape b), une somme de contrôle est formée pour des bits individuels des données reçues par la deuxième unité d'émission/réception (2) en fonction des premières données transmises par la première unité d'émission/réception (1) à l'étape a) et est transmise par la deuxième unité d'émission/réception (2) à la première unité d'émission/réception (1) en tant que résultat provenant de la combinaison.

10. Système de transmission,
comprenant une première unité d'émission/réception (1) et une deuxième unité d'émission/réception (2),
la première unité d'émission/réception (1) étant exécutée pour la transmission de premières données à la deuxième unité d'émission/réception (2),
la deuxième unité d'émission/réception (2) étant exécutée pour la transmission de deuxièmes données à la première unité d'émission/réception (1) en fonction des données reçues après cela par la deuxième unité d'émission/réception (2), et
la première unité d'émission/réception (1) étant exécutée pour évaluer les données reçues après cela de la part de la deuxième unité d'émission/réception par la première unité d'émission/réception, afin de déterminer la qualité de transmission de la transmission entre la deuxième unité d'émission/réception (2) et la première unité d'émission/réception (1),
**caractérisé en ce**
**que** la deuxième unité d'émission/réception (2) est exécutée de telle manière qu'elle combine entre elles, tout du moins en partie, les données reçues en fonction des premières données transmises par la première unité d'émission/réception (1) et qu'elle transmet le résultat provenant de la combinaison à la première unité d'émission/réception (1) en tant que partie intégrante des deuxièmes données.

11. Système de transmission selon la revendication 10, **caractérisé en ce que** la première unité d'émission/réception (1) est exécutée pour réaliser le procédé selon l'une quelconque des revendications 1 à 9.

12. Système de transmission selon la revendication 10 ou 11, **caractérisé en ce que** la deuxième unité d'émission/réception (2) est exécutée pour réaliser le procédé selon l'une quelconque des revendications 1 à 9.
